# EUROPEAN PATENT APPLICATION

(11) **EP 1 731 301 A1**
(43) Date of publication of application: **13.12.2006**
(21) Application number: 05728015.8
(22) Date of filing: 31.03.2005
(51) Int. Cl.: B32B 9/00

(54) **ARTICLE WITH SILICA COATING FORMED AND PROCESS FOR PRODUCING THE SAME**

(30) Priority: 31.03.2004 JP 2004104503; 17.09.2004 JP 2004271618; 17.09.2004 JP 2004271624
(71) Applicant: Nippon Sheet Glass Company, Limited, Tokyo 105-8552 (JP)
(72) Inventor: SASAKI, T., NIPPON SHEET GLASS COMPANY, LIMITED, Tokyo 1058552 (JP); INOGUCHI, K., NIPPON SHEET GLASS COMPANY, LIMITED, Tokyo 1058552 (JP); KAMITANI, K., NIPPON SHEET GLASS COMPANY, LIMITED, Tokyo 1058552 (JP)
(74) Representative: Hubert, Philippe
(86) International application number: PCT/JP2005/006338
(87) International publication number: WO 2005/095102

(57) **Abstract**

The present invention provides an article with a silica-based film, wherein the film does not separate from a substrate after the Taber abrasion test prescribed in Japanese Industrial Standards (JIS) R 3212 although the thickness of the film formed by a sol-gel process exceeds 300 nm. This film can be formed by an improved sol-gel process, that is, a sol-gel process by using a coating solution wherein silicon alkoxide has a concentration of more than 3 mass% and less than 9 mass% in terms of a SiO₂ concentration, the molality of protons is 0.001 to 0.2 mol/kg, and the number of moles of the water is at least four times and at most ten times the total number of moles of the silicon atoms, and by heating a substrate at the temperature above 100°C.

## Description

### Technical Field

The present invention relates to an article with a silica-based film, and a process for producing the same. Particularly, the present invention relates to an article on which a silica-based film, which has excellent mechanical strength even when thick, is formed by an improved sol-gel process, and to an article obtained by the production process.

### Background Art

Generally, silica-based films are hard and also can be used in the form of films that coat substrates. However, when employing a melting method, a high temperature treatment is necessary for obtaining a silica-based film. This limits the materials of which the substrates and films can be made.

The sol-gel process is a process of obtaining an oxide in a solid state by: using a solution of an organic or inorganic compound of metal as a starting material; rendering the solution into a sol in which fine particles of metal oxides or hydroxides have dissolved, through the hydrolysis reaction and polycondensation reaction of the compound contained in the solution; further gelling and solidifying the sol; and heating this gel if necessary.

The sol-gel process allows silica-based films to be produced at lower temperatures. Processes of forming silica-based films by the sol-gel process are disclosed in JP55(1980)-034258A, JP63(1988)-241076A, JP8(1996)-27422A, JP63(1988)-268772A, JP2002-088304A, JP5(1993)-85714A, JP6(1994)-52796A, JP63(1988)-168470A, and JP11(1999)-269657A, for example.

Generally, the silica-based films formed by the sol-gel process have lower mechanical strength than that of silica-based films obtained by the melting method.

JP11(1999)- 269657A discloses a process for producing a silica-based film by applying an alcohol solution that is used as a coating solution to a substrate. The alcohol solution contains 0.010 to 3 wt%, in terms of silica, of at least one selected from silicon alkoxide and hydrolysate thereof (including partial hydrolysate), 0.0010 to 1.0N of acid, and 0 to 10 wt% of water.

The silica-based film obtained by this process has strength to an extent that allows the film to withstand the dry abrasion test. It probably cannot be said that the silica-based film has sufficiently high strength, but it has high mechanical strength for a film obtained by the sol-gel process. However, in the case of the silica-based film that can be formed by the process disclosed in JP11(1999)-269657A, the thickness thereof is limited to 250 nm maximum when consideration is given to obtaining an appearance that is good enough for practical use. The thickness of the silica-based film that is formed by the sol-gel process is generally around 100 to 200 nm.

As is disclosed in JP63(1988)-168470A, a coating solution containing colloidal silica added thereto allows a film with a thickness exceeding 1 µm to be formed through a single application. However, the film obtained using this coating solution has a pencil hardness of merely around 8H and does not have sufficiently high mechanical strength.

When the coating solution is applied twice, the film obtained thereby has increased thickness. However, the silica-based film thus obtained does not have high characteristics in mechanical strength, particularly abrasion resistance. This is mainly because the coating solution is applied twice, which induces cracks in the film.

Consequently, it is difficult to obtain a silica-based film that has a thickness exceeding 250 nm and has excellent mechanical strength, by the sol-gel process.

### Disclosure of Invention

The present invention provides a novel sol-gel process for producing a silica-based film having excellent mechanical strength. According to the present invention, a silica-based film having excellent mechanical strength can be obtained even when the thickness thereof exceeds 300 nm.

The present invention provides an article with a silica-based film, which includes a substrate and a silica-based film that is formed on the surface of the substrate by a sol-gel process. The thickness of the silica-based film is more than 300 nm and the silica-based film does not separate from the substrate after the Taber abrasion test prescribed in Japanese Industrial Standards (JIS) R 3212 that is carried out with respect to the surface of the silica-based film.

In this description, the term "silica-based film" denotes a film in which silica is a component with the highest content. The Taber abrasion test according to JIS R 3212 can be carried out using a commercially available Taber abrasion tester. This test is an abrasion test that is carried out at a rotation number of 1000, with a load of 500 g being applied, as prescribed in the JIS.

From another aspect, the present invention provides a process for producing an article with a silica-based film, which includes a substrate and a silica-based film that is formed on the surface of the substrate. The process includes: applying a film-forming solution for forming the silica-based film to the surface of the substrate; and heating the substrate to which the film-forming solution has been applied.

In the production process of the present invention, the film-forming solution contains silicon alkoxide, strong acid, water, and alcohol. The silicon alkoxide has a concentration of more than 3 mass% and less than 9 mass % in terms of a SiO₂ concentration when silicon atoms contained in the silicon alkoxide are expressed as SiO₂. The strong acid has a concentration in the range of 0.001 to 0.2 mol/kg in terms of the molality of protons that is obtained, assuming that the protons have dissociated completely from the strong acid. The number of moles of the water is at least four times and at most ten times the total number of moles of the silicon atoms contained in the silicon alkoxide.

In the production process of the present invention, the substrate is heated at a temperature above 100°C.

According to the present invention, a silica-based film that has excellent mechanical strength, even though its thickness exceeds 300 nm, can be formed by the sol-gel process.

### Description of the Invention

First, the reason why the mechanical strength of the film is improved by the present invention is described below.

In the case of the sol-gel process using silicon alkoxide as a starting material, the silicon alkoxide in the film-forming solution (coating solution) forms an oligomer having siloxane bonds through the hydrolysis reaction and polycondensation (dehydration condensation) reaction in the presence of water and a catalyst in the coating solution, and thereby the coating solution is changed into a sol state.

The coating solution in the sol state is applied to the substrate and then an organic solvent such as alcohol and water volatilize from the coating solution that has been applied. In this drying step, the oligomer is concentrated to have a higher molecular weight and eventually loses flowability. Thus a film of a semisolid gel is formed on the substrate. Immediately after gelation, gaps that are present in the network of the siloxane bonds are filled with the organic solvent and water. When the solvent and water volatilize from the gel, the siloxane polymer contracts and thereby the film is cured.

In the case of a gel obtained by the conventional sol-gel process, gaps that have remained after the organic solvent and water are removed are not filled completely and remain as pores even after a heat treatment is carried out at a maximum temperature of around 400°C. When the pores remain, the film cannot have sufficiently high mechanical strength. Hence, conventionally, it has been considered that in order to obtain a sufficiently hard film, a heat treatment has to be carried out at a high temperature that exceeds 400°C, for example, at least 450°C and preferably at least 500°C.

The relationship between the reaction and the temperature in the heat treatment of a silica-based film that is formed by the sol-gel process is described further in detail. When the heat treatment is carried out at around 100 to 150°C, the solvent and water in the coating solution evaporate. In the case where the heat treatment is carried out at around 250 to 400°C, when an organic material is contained in the raw material, the organic material decomposes and evaporates. Furthermore, when the heat treatment is carried out at a temperature of approximately 500°C or higher, the gel skeleton contracts and thereby the film becomes dense.

The size of the gaps of the network that remain after gelation depends on the form of polymerization of silicon alkoxide in the solution.

The form of polymerization varies depending on pH of the solution. In an acidic solution, the oligomer of silicon alkoxide tends to grow linearly. When such a solution is applied to the substrate, the linear oligomer is folded and thereby forms a network structure. The film obtained thereby is a dense film having relatively smaller gaps. However, since the film is solidified, with the linear polymer being folded, the microstructure is not strong. Therefore, the film tends to crack when the solvent and water volatilize from the gaps.

On the other hand, in an alkaline solution, spherical oligomers tend to grow. When such a solution is applied to the substrate, a structure in which spherical oligomers are joined to each other is formed. Accordingly, the film obtained thereby has relatively large gaps. Since these gaps are formed through bonding and growth of the spherical oligomers, the film tends not to crack when the solvent and water volatilize from the gaps.

The present invention has been completed based on the following knowledge. That is, even when thick, a crack-free dense film can be formed under certain conditions when the concentration of strong acid, water content, etc. are adjusted appropriately in the acidic region that allows a relatively dense film to be formed.

Silanol has an isoelectric point of 2. This denotes that silanol can exist most stably in the coating solution when the solution has a pH of 2. That is, even if a large amount of hydrolyzed silicon alkoxide exists in the solution, the probability that oligomers are formed through the dehydration condensation reaction is very low when the solution has a pH of about 2. Consequently, hydrolyzed silicon alkoxide can exist in the form of monomers or in a lower degree of polymerization in the coating solution.

In the range where the pH is around 2, one alkoxyl group per molecule is hydrolyzed in silicon alkoxide and thereby the silicon alkoxide becomes silanol and is stabilized in this state. For example, in the case of tetraalkoxysilane that has four alkoxyl groups, one of the alkoxyl groups is hydrolyzed and thereby it becomes silanol and is stabilized in this state.

The solution will have a pH of around 3 to 1 when a strong acid is added to the sol-gel solution so that the molality (mass molality) of protons (hereinafter also referred to simply as "proton concentration") that is obtained, assuming that the protons have dissociated completely from the strong acid, is 0.001 to 0.1 mol/kg. When the pH is adjusted in this range, silicon alkoxide can exist in the coating solution stably as monomeric or lower polymerized silanol. A pH of around 2 denotes a relatively highly acidic state. In order to obtain such a pH, it is necessary to use a strong acid.

The coating solution of the present invention contains a mixed solvent of water and alcohol, but another solvent can be added thereto if necessary. Similarly to the case of using such a mixed solvent, a solution having a pH of around 2 can be obtained by using a strong acid and adding it so that the molality of protons that is obtained, assuming that the protons have dissociated completely from the strong acid, is 0.001 to 0.2 mol/kg.

For the calculation of the molality of protons, protons of the acid to be used whose acid dissociation constant in water is 4 or higher need not be taken into account. For instance, since the acid dissociation constant of acetic acid, which is a weak acid, in water is 4.8, the protons of the acetic acid are not included in the proton concentration even when acetic acid is contained in the coating solution. In this description, the strong acid denotes, specifically, an acid having protons whose acid dissociation constant in water is lower than 4.

The reason why the proton concentration is defined as a concentration that is determined when the protons have dissociated completely from the strong acid, as described above, is as follows. That is because in a mixed solution of water and an organic solvent such as alcohol, it is difficult to determine the degree of dissociation of a strong acid accurately.

When the coating solution is applied to the substrate surface while being maintained at a pH of around 1 to 3 and then is dried, the hydrolysis is not completed and the film is filled densely with silicon alkoxide that is in a lower polymerized state. Accordingly, a considerably dense film with finer pores can be obtained.

Although this film is dense, the hardness thereof does not become higher than a certain degree due to insufficient hydrolysis, even when it is heated at 200 to 300°C. Hence, excess water is added to silicon alkoxide so that the hydrolysis of silicon alkoxide is facilitated not only before the application of the coating solution but also after the application. In the state where hydrolysis progresses readily, the film is cured even if it is not heated to a high temperature. Specifically, water having a maximum number of moles that is required for hydrolysis, i.e. a number of moles that is at least four times the total number of moles of silicon atoms in silicon alkoxide, is added.

In the drying step, water evaporates in parallel with the volatilization of the solvent. When this is taken into consideration, it is further preferable that the number of moles of water be more than four times, for example, 5 to 10 times the total number of moles of the silicon atoms.

In silicon alkoxide, a maximum of four alkoxyl groups can bind to one silicon atom. Alkoxide that has a small number of alkoxyl groups requires a smaller number of moles of water for hydrolysis. Furthermore, even in the case of tetraalkoxysilane, in which four alkoxyl groups are bound to a silicon atom, the total number of moles of water required for hydrolysis of a polymerized material thereof (that is commercially available as, for instance, "Ethyl silicate 40" manufactured by COLCOAT Co., Ltd.) is less than four times that of the silicon atoms (the number of moles of water required for hydrolysis stoichiometrically is (2*n* + 2) moles where *n* denotes the number of moles of Si contained in the polymerized material (*n* ≥ 2)). The higher the polymerization degree of the alkoxysilane material to be used, the smaller the number of moles of water required for hydrolysis. Hence, practically, the number of moles of water required for the hydrolysis of silicon alkoxide may be less than four times the total number of moles of silicon atoms in the silicon alkoxide. In the present invention, however, in view of the fact that addition of excess water is preferred, water is added in a number of moles that is at least four times the total number of moles of silicon atoms.

Addition of water in a number of moles exceeding that required for hydrolysis stoichiometrically accelerates the hydrolysis reaction of silicon alkoxide in the drying step. The variation of pH of the applied solution from the above-mentioned range due to volatilization of the solvent and vaporization of water also is one of the factors that accelerate hydrolysis. By forming a dense film and allowing the hydrolysis and polycondensation reaction to progress sufficiently as described above, a hard film is formed. As a result, a film with excellent mechanical strength can be obtained through a heat treatment that is carried out at a lower temperature than that employed conventionally.

The use of this method makes it possible to obtain a silica-based film that has excellent mechanical strength although being thick. A thick film can be obtained by preparing the coating solution so that the concentration of silicon alkoxide is relatively high. For example, the silicon atoms contained in the silicon alkoxide exceeds 3 mass% in terms of the SiO₂ concentration when the silicon atoms are expressed as SiO₂.

The concentration of the silicon alkoxide, however, should be adjusted so as to be 9 mass% or less in terms of the above-mentioned SiO₂ concentration. This is because when the concentration of the silicon alkoxide becomes excessively high, shrinkage of the film in the drying step becomes large and thereby a crack may occur in the film, resulting in deterioration of mechanical strength of the film.

Further, the mole number of water should be at most 10 times the total mole number of silicon atoms. This is because when too much water is present, shrinkage of the film in the drying step becomes high and thereby a crack may occur in the film, resulting in deterioration of mechanical strength of the film.

With the improvement of the sol-gel process described above, the present invention provides an article with a silica-based film formed on a substrate. The silica-based film does not separate from the substrate even after having been subjected to the Taber abrasion test prescribed in JIS R 3212 even when thick.

The thickness of the silica-based film can exceed 300 nm. Moreover, it is possible that the film thickness be 350 nm or more, furthermore, 400 nm or more, and still furthermore, 450 or more, if necessary. According to the present invention, a considerably thick film can be formed. In order not to cause the separation of the film after the Taber abrasion test, however, it is recommended that the upper limit of the film thickness be less than 1µm, preferably less than 800 nm, and more preferably less than 700 nm.

The present invention also allows a portion that has been subjected to the Taber abrasion test to have a haze ratio of 4% or lower, further 3% or lower after the Taber abrasion test. This mechanical strength is comparable to that of a vitreous film obtained by the melting method.

According to the present invention, the thick silica-based film having excellent mechanical strength can be formed even on a substrate that does not have particularly good heat resistance. In the present invention, the substrate may be a glass plate or a resin plate.

In order to lower melting temperature, an alkali component such as Na and K often is contained in the glass raw material for the melting method. Contrary to this, the silica-based film of the present invention, which is formed by the sol-gel process, may be free from the alkali component. When a glass plate for the melting method, for example, a glass plate containing the alkali component typified by a soda-lime-silica glass plate is used as a substrate, the article according to the present invention has the glass plate containing the alkali component and the silica-based film that is formed on the surface of the plate and substantially free from the alkali component. Here, the term "substantially free from" is used with the meaning that a trace amount of the alkali such as an amount of the component diffused from the glass plate into the film may be contained.

The silica-based film in accordance with the present invention might contain a component other than silica and a remaining component that is derived from the film raw material and remains in the film, such as an acid and a remaining component derived from an alkoxyl group.

The silica-based film in accordance with the present invention can be formed with a large thickness and therefore, has an advantage in the addition of a functional material for imparting a variety of functions to the film.

Examples of the functional material that may be added to the silica-based film include various fine particles. As the fine particles, at least one selected from fine particles of conductive oxide and fine particles of an organic material is preferable. The fine particles of conductive oxide are typically ITO (indium thin oxide) fine particles. As the fine particles of an organic material, fine latex particles, etc. are exemplified.

Heating of the fine ITO particles to 250°C or higher deteriorates their heat shielding property. In the present invention, the heating temperature of the substrate may be adjusted appropriately depending on the heat resistance of the functional material.

The silica-based film in accordance with the present invention may contain an organic material and on the other hand, may be substantially free from an organic material. Here, the term "substantially free from" is used with the meaning that a trace amount of an organic component that is derived from the organic raw material such as silicon alkoxide and an organic acid in the film-forming solution may be contained. The silica-based film in accordance with the present invention may be a film that is substantially free from an organic material and may be a film that is free from a hydrophilic organic polymer.

In the process of the present invention, the silicon alkoxide is preferably at least one selected from tetraalkoxysilane and a material made by polymerization of tetraalkoxysilane. The silicon alkoxide and the polymerized material thereof may contain a hydrolyzed alkoxyl group.

The acid used in the production process of the present invention, is preferably a strong acid. Examples of the strong acid include hydrochloric acid, nitric acid, trichloroacetic acid, trifluoroacetic acid, sulfuric acid, methanesulfonic acid, paratoluenesulfonic acid, and oxalic acid. Among strong acids, volatile acids can be used advantageously since they volatilize during heating and thus do not remain in the film that has been cured. The acid remaining in the film that has been cured may hinder binding of inorganic components and thereby may deteriorate the film hardness.

The process of the present invention includes a step of applying a film-forming solution and a step of heating the substrate to which the film-forming solution has been applied. Liquid components contained in the film-forming solution, for example, at least one part of and preferably substantially all of the water or alcohol, are removed in the heating step or in both of the heating step and a drying step that can be preformed prior to the heating step.

In the heating step, the substrate is heated to the temperature above 100°C, preferably above 150°C, and this heating allows the silica-based film to cure and thereby enhances mechanical strength of the film. The heating temperature in this step is, for example, 400°C or less, and preferably 300°C or less, since an excessively high temperature causes cracks.

The silica-based film of the present invention has a comparable film hardness to that of molten glass although it is heat-treated at a relatively lower temperature. Hence, this silica-based film is suitable for practical use even when it is used for window glasses for automobiles or buildings.

Hereinafter, the present invention is described further in detail using examples.

### Example 1

First, 10.6 g of tetraethoxysilane (manufactured by Shin-Etsu Chemical Co., Ltd.), 7.0 g of pure water, and 0.05 g of concentrated hydrochloric acid (35 mass%, manufactured by KANTO CHEMICAL CO., INC.) were added to 89.8 g of ethyl alcohol (manufactured by KATAYAMA CHEMICAL, Inc.). This was stirred and thus a film-forming solution was obtained.

With respect to this solution, the content (indicated in terms of silica) of silicon alkoxide (tetraethoxysilane), the proton concentration, and the content of water are indicated in Table 1. The content of water was calculated to include water (0.35 mass%) contained in the ethyl alcohol. The proton concentration was calculated, assuming that all the protons contained in the hydrochloric acid had dissociated. The same methods of calculating the water content and proton concentration as those described above are employed in all the examples and comparative examples described below.

Subsequently, the film-forming solution was applied to a soda-lime-silicate glass substrate (100 x 100 mm) that had been washed, at a humidity (relative humidity) of 30% and at room temperature by a flow coating method. In this state, it was dried at room temperature for about 30 minutes. Thereafter, it was placed in an oven whose temperature had been raised to 200°C beforehand and then was heated for 40 minutes. After that, it was cooled. The film thus obtained was a 400-nm thick film that had high transparency and was free from cracks.

The hardness of the film was evaluated by the abrasion test according to JIS R 3212. That is, using a commercially available Taber abrasion tester (5150 ABRASER, manufactured by TABER INDUSTRIES), the film was subjected to abrasion 1000 times with a load of 500 g. The haze ratio was measured before and after the abrasion test. Table 1 indicates the film thickness, presence or absence of cracks, and presence or absence of film separation after the Taber test.

The haze ratio before the Taber abrasion test was 0.1%, and that after the test was 3.3%. It should be noted that the haze ratios of a molten glass sheet were measured before and after the Taber test of a molten glass sheet, as a blank. The haze ratio before the test was 0.0% and that after the test was 1.5%. The haze ratios were measured using HGM-2DP manufactured by SUGA TEST INSTRUMENTS Co., Ltd.

The glass sheet with a silica film produced in Example 1 is highly useful even when it is used for window glasses for automobiles or buildings. For the window glass for automobiles, a haze ratio is required to be 4% or lower after the Taber test.

### Examples 2 to 7 and Comparative Examples 1 and 2

Films were formed in a manner similar to Example 1, except that the mixing ratios of raw materials were changed. The mixing ratios of raw materials are shown in Table 1 together with the film thicknesses and the results of Taber abrasion test.

With respect to Examples 2 to 7 and Comparative Examples 1 and 2, only proton concentrations were changed. In Comparative Example 1 in which the proton concentration was decreased, application of the film-forming solution could not be performed since the glass plate repelled the film-forming solution. The reason is believed to be that hydrolysis of silicon alkoxide was extremely insufficient. In Example 7 in which the proton concentration was increased, cracks appeared in a part of the film. However, after the film was subjected to the Taber abrasion test that was performed on the region where no crack appeared, the separation of the film was not observed. In Comparative Example 2 in which the proton concentration was increased more, cracks appeared in the wider area than that of Example 7, and the film thickness could not be measured. After the film was subjected to the Taber abrasion test that was performed on the region where no crack appeared, the separation of the film was observed.

### Examples 8 and 9 and Comparative Examples 3 and 4

Films were formed in a manner similar to Example 1, except that the mixing ratios of raw materials were changed. The mixing ratios of raw materials are shown in Table 1 together with the film thicknesses and the results of Taber abrasion test.

With respect to Examples 8 and 9 and Comparative Examples 3 and 4, only the addition amounts of water were changed. In Comparative Example 3, fine cracks accompanied by separation appeared and the film was separated by the Taber abrasion test. In Example 9 and Comparative Example 4, cracks appeared in a part of the film. However, after the film was subjected to the Taber abrasion test that was performed on the region where no crack appeared, the separation of the film was not observed in Example 9 but was observed in Comparative Example 4.

### Examples 10 to 12 and Comparative Example 5

Films were formed in a manner similar to Example 1, except that the mixing ratios of raw materials were changed. The mixing ratios of raw materials are shown in Table 1 together with the film thicknesses and the results of Taber abrasion test.

With respect to Examples 10 to 12 and Comparative Example 5, only the addition amounts of silicon alkoxide were changed. In all examples, cracks appeared in a part of the film. However, after the film was subjected to the Taber abrasion test that was performed on the region where no crack appeared, the separation of the film was not observed in Examples 10 to 12 but was observed in Comparative Example 5. It should be noted that in Comparative Example 5, many cracks appeared so that the thickness of the film could not be measured.

**Table 1**

| | Silicon Alkoxide (in terms of SiO₂; mass%) | Proton Concentration (mol/kg) | Water (to Si Content; mole ratio) | Film Thickness (nm) | Presence of Cracks | Film Separation after Taber Test |
|---|---|---|---|---|---|---|
| Example 1 | 3.1 | 0.004 | 8 | 400 | No | No |
| Comparative Example 1 | 5.0 | 0.0001 | 7 | - | - | - |
| Example 2 | 5.0 | 0.001 | 7 | 480 | No | No |
| Example 3 | 5.0 | 0.01 | 7 | 510 | No | No |
| Example 4 | 5.0 | 0.02 | 7 | 480 | No | No |
| Example 5 | 5.0 | 0.03 | 7 | 450 | No | No |
| Example 6 | 5.0 | 0.05 | 7 | 480 | No | No |
| Example 7 | 5.0 | 0.1 | 7 | 460 | Yes | No |
| Comparative Example 2 | 5.0 | 0.3 | 7 | - | Yes | Yes |
| Comparative Example 3 | 5.0 | 0.01 | 2 | - | Yes | Yes |
| Example 8 | 5.0 | 0.01 | 4 | 430 | No | No |
| Example 9 | 5.0 | 0.01 | 10 | 490 | Yes | No |
| Comparative Example 4 | 5.0 | 0.01 | 15 | 460 | Yes | Yes |
| Example 10 | 6.0 | 0.01 | 7 | 520 | Yes | No |
| Example 11 | 7.0 | 0.01 | 7 | 630 | Yes | No |
| Example 12 | 8.0 | 0.01 | 7 | 740 | Yes | No |
| Comparative Example 5 | 9.0 | 0.01 | 7 | - | Yes | Yes |

The examples and comparative examples described above are only examples for explaining the present invention. The present invention is not limited to these examples.

For instance, tetramethoxysilane, methyl silicate, etc. can be used as silicon alkoxide.

Furthermore, an organically modified alkoxide may be used as silicon alkoxide. In this case, however, it is preferable that the amount of organically modified silicon alkoxide be 10% or less of the number of moles of silicon atoms contained in silicon alkoxide that are not organically modified.

Strong acid to be used herein can be sulfuric acid, p-sulfonic acid, methanesulfonic acid, etc.

Alcohol to be used herein can be methyl alcohol, 1-propyl alcohol, isopropyl alcohol, t-butyl alcohol, etc.

Furthermore, metal oxides other than silica may be added to the silica-based film of the present invention.

For instance, chlorides, oxides, or nitrates of metals such as lithium, sodium, potassium, cesium, magnesium, calcium, cobalt, iron, nickel, copper, aluminum, gallium, indium, scandium, yttrium, lanthanum, cerium, zinc, etc. may be added to the coating solution.

With respect to boron, it is possible to add boric acid or alkoxide of boron that has been chelated with beta-diketone such as acetylacetone.

With respect to titanium and zirconium, oxychloride, oxynitrate, or alkoxide that has been chelated with beta-diketone can be added.

With respect to aluminum, it is possible to add alkoxide that has been chelated with beta-diketone.

### INDUSTRIAL APPLICABILITY

The article with the silica-based film according to the present invention is useful as an underlayer film, a protection film, a low reflection film, an ultraviolet ray shielding film, an infrared ray shielding film, a colored film and the like.

## Claims

1. An article with a silica-based film, the article comprising a substrate and a silica-based film that is formed on a surface of the substrate by a sol-gel process,
wherein the thickness of the silica-based film is more than 300 nm, and
the silica-based film does not separate from the substrate after the Taber abrasion test prescribed in Japanese Industrial Standards R 3212 that is carried out with respect to a surface of the silica-based film.

2. The article according to claim 1, wherein the thickness of the silica-based film is not less than 350 nm and less than 1 µm.

3. The article according to claim 2, wherein the thickness of the silica-based film is not less than 400 nm and less than 1 µm.

4. The article according to claim 1, wherein the substrate is a glass plate or a resin plate.

5. The article according to claim 1, wherein the substrate is a glass plate containing an alkali component and the silica-based film is substantially free from an alkali component.

6. A process for producing an article with a silica-based film by a sol-gel process, the article including a substrate and a silica-based film that is formed on a surface of the substrate,
the process comprising:
applying a film-forming solution for forming the silica-based film to the surface of the substrate, and
heating the substrate to which the film-forming solution has been applied,
wherein the film-forming solution contains silicon alkoxide, strong acid, water, and alcohol;
the silicon alkoxide has a concentration of more than 3 mass% and less than 9 mass% in terms of a SiO₂ concentration when silicon atoms contained in the silicon alkoxide are expressed as SiO₂;
the number of moles of the water is at least four times and at most ten times the total number of moles of the silicon atoms contained in the silicon alkoxide;
the strong acid has a concentration in the range of 0.001 to 0.2 mol/kg in terms of the molality of protons that is obtained assuming that the protons have dissociated completely from the strong acid; and
the substrate is heated at a temperature above 100°C.

7. The process for producing an article according to claim 6, wherein the film-forming solution is applied so that the thickness of the silica-based film exceeds more than 300 nm.

8. The process for producing an article according to claim 7, wherein the film-forming solution is applied so that the thickness of the silica-based film is not less than 350 nm and less than 1 µm.

9. The process for producing an article according to claim 6, wherein the substrate is heated at a temperature above 150°C.

10. The process for producing an article according to claim 9, wherein the substrate is heated at a temperature above 150°C and not more than 400°C.

11. The process for producing an article according to claim 6, wherein the silicon alkoxide contains at least one selected from tetraalkoxysilane and a material made by polymerization of tetraalkoxysilane.

12. The process for producing an article according to claim 6, wherein the substrate is a glass plate or a resin plate.
